# EUROPÄISCHE PATENTSCHRIFT

(11) **EP 3 291 043 B1**
(45) Veröffentlichungstag und Bekanntmachung des Hinweises auf die Patenterteilung: **02.01.2019**
(21) Anmeldenummer: 17185044.9
(22) Anmeldetag: 07.08.2017
(51) Int. Cl.: G05D 23/19, G05B 13/04, H05B 1/02, F24C 7/08

(54) **HEIZUNGSSTEUERUNG EINES HAUSHALTGERÄTS ÜBER VIRTUELLE TEMPERATUR**
HEATER CONTROL OF A HOUSEHOLD APPLIANCE USING VIRTUAL TEMPERATURE
DISPOSITIF DE COMMANDE DE CHAUFFAGE D'UN APPAREIL MÉNAGER PAR LA TEMPÉRATURE VIRTUELLE

(30) Priorität: 06.09.2016 DE 102016116598
(43) Veröffentlichungstag der Anmeldung: 07.03.2018
(73) Patentinhaber: Miele & Cie. KG, 33332 Gütersloh (DE)
(72) Erfinder: Junkmann, Michael, 33397 Rietberg (DE); Horstbrink, Stefan, 33332 Gütersloh (DE); Lyttek, Marco, 89173 Lonsee (DE)

(56) Entgegenhaltungen:
- WO-A1-02/01917
- WO-A1-2006/114340
- US-A1- 2010 319 651

## Beschreibung

Die Erfindung betrifft ein Verfahren zur Steuerung der Heizung eines Haushaltgeräts unter Verwendung einer virtuellen Temperatur eines zu beheizenden Bereichs, sowie ein Haushaltgerät, das nach dem Verfahren arbeitet, insbesondere ein Gargerät.

Aus der Druckschrift WO 02/01917 A1 ist bekannt, zumindest zwei Heizvorrichtungen zur Beeinflussung der Garraumtemperatur eines Backofens in einem Testbetrieb für eine vorgegebene Testzeit zu betreiben, die von den zwei Heizvorrichtungen erzeugte Temperatur mittels eines zur Regelung der Garraumtemperatur vorhandenen Temperatursensors zu messen und in Abhängigkeit vom Wert der gemessenen Temperatur ein Signal zu erzeugen, um die Funktionsfähigkeit der Heizvorrichtungen zu überwachen.

Bei Haushaltgeräten mit einer Heizung ist es aus Sicherheitsgründen erforderlich, eine Abschaltung bei zu hoher Temperatur vorzusehen. Die Temperatur des zu beheizenden Bereichs wird mit einem Temperatursensor erfasst und bei Überhitzung die Heizung abgeschaltet. Temperatursensoren, insbesondere solche, die mehr oder weniger direkt hohen Temperaturen ausgesetzt sind, können jedoch versagen. Um dennoch eine sichere Abschaltung zu erzielen, kann eine Redundanz in Form eines weiteren Temperatursensors vorgesehen werden.

Zusätzliche Bauteile sind jedoch grundsätzlich nachteilig, da sie das Gerät verteuern. Weiterhin benötigt ein zusätzlicher Sensor eine entsprechende Verkabelung und die Auswerteelektronik muss ebenfalls entsprechend ausgestaltet werden. Es wird zusätzlicher Bauraum benötigt, der bei ansonsten vorgegebenen Abmessungen des Geräts für andere Bauteile und nutzbaren Raum fehlt.

Eine rein sensorbasierte Steuerung kann nur dann korrekt arbeiten, wenn die gemessenen Werte verlässlich sind. Der zusätzliche Sensor kann jedoch grundsätzlich aufgrund der gleichen Gründe ausfallen oder versagen wie der erste Sensor, so dass möglicherweise falsche Messwerte nicht erkannt werden können, selbst wenn redundante Sensoren vorhanden sind. Eine Möglichkeit zur Plausibilisierung gemessener Werte ist bei bekannten Haushaltgeräten nicht vorgesehen.

Der Erfindung stellt sich daher das Problem, ein verbessertes Verfahren zur Heizungssteuerung sowie ein entsprechend arbeitendes Gerät bereitzustellen, wobei ein einzelner Temperatursensor genügt, um - auch im Sinne der für die Gerätesicherheit zu erfüllenden normativen Anforderungen (mit einem Sensor) unter Berücksichtigung der relevanten Fehlermodelle - mindestens die gleiche Zuverlässigkeit und Sicherheit zu gewährleisten wie mit zwei redundanten Temperatursensoren.

Die Aufgabe wird durch ein Verfahren sowie ein Haushaltgerät nach den unabhängigen Ansprüchen gelöst. Vorteilhafte Ausgestaltungen und Weiterbildungen der Erfindung ergeben sich aus den abhängigen Ansprüchen.

Gemäß einem ersten Aspekt wird ein Verfahren zur Steuerung einer Heizung eines zu beheizenden Bereichs eines Haushaltgeräts bereitgestellt, umfassend:
b) Vorgeben eines Temperatur-Startwerts Cₛ;
c) Zeitliches Fortschreiben einer virtuellen Temperatur Cᵥ des zu beheizenden Bereichs, beginnend mit dem Temperatur-Startwert Cₛ, basierend auf einer Kennlinie der Heizung;
d) Fortlaufendes Messen realer Temperaturwerte Cₘ, die die Temperatur des zu beheizenden Bereichs repräsentieren, mit einem einzelnen Temperatursensor;
e) Fortfahren mit Schritt b) unter Verwendung des aktuellen Temperaturwerts Cₘ als Temperatur-Startwert Cₛ, falls die Differenz von zwei aufeinander folgenden Temperaturwerten Cₘ einen Normalzustand des Temperatursensors erkennen lässt; und
f) Deaktivieren der Heizung, falls die Differenz der zwei aufeinander folgenden Temperaturwerte Cₘ einen Fehlerzustand des Temperatursensors erkennen lässt und die virtuelle Temperatur Cᵥ einen Grenzwert überschreitet.

Ein Fehlerzustand wird erfindungsgemäß erkannt, wenn die gemessene Temperatur ein für die aktive Einstellung der Heizung unerwartetes Verhalten zeigt. Erwartetes Verhalten wäre hier beispielsweise so zu verstehen, dass bei aktiver Heizung in einer bestimmten Zeit ein Anstieg um mindestens die Differenz von z.B. 2°C zu erwarten ist. Ein unerwartetes Verhalten kann bedeuten, dass der Temperatursensor nicht korrekt misst und somit die tatsächliche Temperatur im zu beheizenden Bereich abweicht, insbesondere, dass sie höher als gemessen ist.

Sofern unter diesen Bedingungen weiter geheizt würde, könnte das Haushaltgerät Schaden aufgrund von zu hohen Temperaturen nehmen, oder es könnte aufgrund zu hoher Temperaturen zu einem Verstoß gegen normative Anforderungen kommen, etwa weil eine berührbare Fläche zu heiß wird. Ein verfrühtes Abschalten bereits aufgrund des unerwarteten Temperaturverhaltens wäre aber nachteilig, da es die Verfügbarkeit verringert. Einerseits kann es auch andere Gründe für das unerwartete Verhalten geben, die nicht auf einem Defekt beruhen, so dass eine Abschaltung zum Geräteschutz unnötig wäre. Beispielsweise könnte eine Beladung eines Gargeräts mit gefrorenen Lebensmitteln zu einem unerwarteten, in diesem Fall aber unkritischen Verhalten führen.

Andererseits kann davon ausgegangen werden, dass vor dem Eintreten des unerwarteten Verhaltens der Temperatursensor korrekt gemessen hat und sich das Haushaltgerät bzw. der zu beheizende Bereich in einem normalen, unkritischen Temperaturbereich befunden hat. Die Heizung wird üblicherweise - abhängig von der Heizleistung und/oder der thermischen Trägheit des zu beheizenden Bereichs - eine gewisse Zeit benötigen, um das Haushaltgerät bzw. den zu beheizenden Bereich auf kritische Temperaturen zu heizen, so dass diese Zeitspanne ohne Beeinträchtigung der Sicherheit genutzt werden kann, um die Abschaltung aufzuschieben. Dadurch kann die Verfügbarkeit erhöht werden.

Parallel wird die virtuelle Temperatur weiter fortgeschrieben. Sofern vor dem Erreichen des Grenzwerts die gemessene Temperatur erneut ein erwartetes Verhalten zeigt, wird davon ausgegangen, dass der Temperatursensor korrekt misst, die virtuelle Temperatur wird auf den zuletzt gemessenen Wert gesetzt und von dort beginnend weiter fortgeschrieben. Falls aber die virtuelle Temperatur einen Grenzwert überschreitet, während der Fehlerzustand vorliegt, d.h. die gemessene Temperatur ein unerwartetes Verhalten zeigt, wird die Heizung abgeschaltet, um Schäden an dem Haushaltgerät zu verhindern. Der Grenzwert kann sich aufgrund normativer Anforderungen und/oder Geräteschutzanforderungen ergeben.

Der Startwert kann beispielsweise so gewählt werden, dass er berücksichtigt, dass das Haushaltgerät bzw. der zu beheizende Bereich beim Einschalten noch heiß sein kann, z.B. von einem vorhergehenden Garvorgang. Bevorzugt wird der initiale Startwert beim Einschalten des Haushaltgeräts daher nur knapp unterhalb des Grenzwerts angesetzt.

Das erfindungsgemäße Verfahren ermöglicht es, mit nur einem einzelnen Temperatursensor auszukommen, um die Heizung zu überwachen. Trotz Verzicht auf zusätzliche, redundante Temperatursensoren kann eine mindestens gleichwertige oder sogar verbesserte Zuverlässigkeit und Betriebssicherheit erzielt werden. Dadurch können die Kosten eines entsprechend aufgebauten Haushaltgeräts verringert werden, und die Anzahl von Bauteilen, die potenziell einem Defekt unterliegen können, wird ebenfalls verringert.

Gerade direkt messende Temperatursensoren, die in der Nähe des oder sogar in dem zu beheizenden Bereich angeordnet sind, werden durch hohe Temperaturen starken Belastungen ausgesetzt und sind somit potenziell defektanfällig. Durch die hierbei nötige hohe Temperaturbeständigkeit sind sie auch kostenintensiv, so dass sich gerade hier das Einsparen von Temperatursensoren positiv auswirkt.

Alternativ oder zusätzlich kann das Heizen auch dann unterbunden werden, wenn zwischen zwei Messzeitpunkten von Temperaturen Cₘ die virtuelle Temperatur den Grenzwert überschreitet. Falls der nächste Temperaturwert Cₘ ein normales Verhalten erkennen lässt, kann die Heizung wieder aktiviert werden.

Gemäß einer Ausführungsform
wird in Schritt e) ein Normalzustand des Temperatursensors erkannt, falls die Differenz der zwei aufeinander folgenden Temperaturwerte Cₘ mindestens so groß wie ein Mindest-Aufheizgradient ist; und
wird in Schritt f) ein Fehlerzustand des Temperatursensors erkannt, falls die Differenz der zwei aufeinander folgenden Temperaturwerte Cₘ kleiner als der Mindest-Aufheizgradient ist.

Es erfolgt ein Plausibilisieren der gemessenen Temperaturwerte unter Berücksichtigung eines zu erwartenden Verhaltens im Heizbetrieb. Im Heizbetrieb des Haushaltgeräts sollte im Normalfall ein Temperaturanstieg zu verzeichnen sein. Solange der gemessene Temperaturwert mit einem Mindestgradienten ansteigt, kann eine normale Funktion angenommen werden. Bevorzugt wird hierfür eine Temperaturdifferenz vorausgesetzt, die oberhalb der Systemtoleranzen liegt und daher einen tatsächlichen neuen Messwert liefert. Sobald der gemessene Temperaturwert jedoch keinen oder einen zu geringen Aufheizgradienten zeigt, kann auf einen Fehler geschlossen werden.

Ein möglicher Grund für ein solches Verhalten besteht darin, dass der Temperatursensor fehlerhaft misst. Ein anderer Grund kann sein, dass bei einem Haushaltgerät mit einem Garraum die Garraumtür offen gelassen bzw. geöffnet wurde. In diesen Fällen kann die Heizung den Garraum nicht mit derselben Geschwindigkeit aufheizen wie bei geschlossener Garraumtür bzw. kann die Temperatur trotz aktiver Heizung abfallen. Ebenfalls denkbar ist ein Defekt der Heizung, die trotz Aktivierung nicht heizt. In derartigen Fehlerfällen wird erfindungsgemäß ein Fehlerzustand aufgrund des Verhaltens der Temperatur erkannt.

Um ein übernervöses Verhalten der Regelung zu verhindern, wird die Abschaltung jedoch erfindungsgemäß auch von der virtuellen Temperatur abhängig gemacht. So wird beispielsweise verhindert, dass bei einem kurzzeitigen Öffnen einer Garraumtür eines Haushaltgeräts eine unnötige Abschaltung erfolgt, die ein für den Benutzer des Haushaltgeräts nicht verständliches Verhalten darstellen würde. Auch würde dadurch das Abkühlen noch verstärkt, so dass selbst nach dem Schließen der Garraumtür eine längere Zeit vergehen würde, bis die Heizung aufgrund steigender Temperatur wieder aktiviert würde.

Gemäß einer Ausführungsform
weist die Heizung eine einstellbare Heizleistung und eine oder mehrere einstellbare Beheizungsarten auf; und
ist die Kennlinie ein von der Einstellung der Heizung abhängiger Temperaturverlauf des zu beheizenden Bereichs.

Die Einstellung der Heizung kann ein unterschiedliches Aufheizverhalten des zu beheizenden Bereichs bedingen. Beispielsweise bei einem Backofen sind die Beheizungsarten Unter- und/oder Oberhitze, Ringheizkörper, Grill oder Kombinationen davon, jeweils mit oder ohne Umluft bekannt. Je nach Heizungsbetriebsart ist die relative Position des einzelnen Temperatursensors in Bezug auf die jeweils aktiven Heizelemente verschieden. Auch wird sich je nach Heizungsbetriebsart das erwärmte Medium anders verteilen und zeitlich ausbreiten. Beispielsweise erfolgt bei Umluftbetrieb eine schnellere und gleichmäßigere Verteilung als bei Unterhitze.

Weiterhin wird der Temperaturverlauf des zu beheizenden Bereichs von der eingestellten Heizleistung abhängen. Sofern die eingestellte Solltemperatur Einfluss auf die Art der Beheizung und/oder die Heizleistung hat, kann auch die Solltemperatur den Aufheizgradienten beeinflussen. Beispielsweise können für hohe Solltemperaturen kurzfristig zusätzliche Heizelement aktiviert werden, während dies bei niedrigeren Solltemperaturen nicht erfolgt.

Durch eine Kennlinie, die für eine jeweilige Kombination der möglichen Parameter Solltemperatur, Heizleistung und Beheizungsart einen zu erwartenden Temperaturverlauf des zu beheizenden Bereichs vorgibt, kann das jeweils für eine bestimmte Einstellung der Heizung zu erwartende Aufheizverhalten berücksichtigt werden. Die Kennlinie muss für eine Geräteserie nur einmal ermittelt werden und kann dann für alle Geräte der Serie verwendet werden, um das Fortschreiben der virtuellen Temperatur zu ermöglichen.

In einer vereinfachten Alternative kann statt mehreren Kennlinien, die sich jeweils aus gemessenen realen Temperaturverläufen ergeben, auch nur eine gemeinsame Kennlinie verwendet werden. Beispielsweise könnte eine gemeinsame Kennlinie sich aus den jeweils höchsten Temperaturen bzw. größten Temperaturanstiegen ergeben. Es würde dann quasi eine "worst case"-Betrachtung erfolgen, die für das Fortschreiben der virtuellen Temperatur stets den höchsten gemessenen Temperaturanstieg annimmt.

Gemäß einer Ausführungsform ist der Mindest-Aufheizgradient konstant oder von der Einstellung der Heizung sowie dem vorhergehenden Wert Cₘ abhängig.

Beispielsweise kann der Mindest-Aufheizgradient 2°C zwischen zwei Temperaturmessungen betragen. Alternativ kann auch - analog zur Aufnahme der Kennlinie für die virtuelle Temperatur - eine Kennlinie für den zu erwartenden minimalen Temperaturverlauf für eine gegebene Heizungseinstellung ermittelt werden. Der Mindest-Aufheizgradient muss dann stets mindestens so groß sein wie sich aus dieser Kennlinie ergibt, ausgehend von der Ist-Temperatur. Als Ist-Temperatur kann bevorzugt der vorherige Wert der gemessenen Temperatur Cₘ verwendet werden.

Gemäß einer Ausführungsform umfasst das Verfahren weiter:
g) Deaktivieren der Heizung, falls die Differenz der zwei aufeinander folgenden Temperaturwerte Cₘ einen Fehlerzustand des Temperatursensors erkennen lässt und die virtuelle Temperatur Cᵥ den Grenzwert nicht überschreitet, aber einen Warnwert überschreitet, der geringer ist als der Grenzwert; und
h) Reaktivieren der Heizung und Fortfahren mit Schritt b) nach einer vorgegebenen begrenzten Zeitspanne.
Diese Ausführungsform kann die Verfügbarkeit der Heizung erhöhen, da ein Abschalten nur vorübergehend für eine begrenzte Zeitspanne erfolgt, und die Heizung danach automatisch wieder reaktiviert wird, auch ohne dass der Temperatursensor bereits wieder ein normales Verhalten anzeigen muss. Ein bevorzugter Wert für die Zeitspanne sind 2-15 Minuten. Aus Sicherheitsgründen wird dies bevorzugt jedoch nur eine begrenzte Anzahl von Malen, am meisten bevorzugt nur ein einziges Mal ausgeführt, nachdem das Gerät eingeschaltet bzw. die Heizung erstmalig nach dem Einschalten aktiviert wurde. In einer beispielhaften Ausführungsform wird im Warnbereich, d.h. beim erstmaligen Auftreten eines Fehlers, 15 Minuten bei ausgeschalteter Heizung gewartet (auf eine absinkende Temperaturdifferenz), bevor ein neuer Versuch gestartet wird, d.h. die Heizung wieder aktiviert wird. Das erneute Auftreten eines Fehlers danach, d.h. ein erneutes Überschreiten der Grenztemperatur durch die virtuelle Temperatur, führt dann zu einer dauerhaften Abschaltung.

Gemäß einer Ausführungsform umfasst das Verfahren nach dem Deaktivieren der Heizung in Schritt f) weiter:
f) Reaktivieren der Heizung und Fortfahren mit Schritt b) unter Verwendung des aktuellen Temperaturwerts Cₘ als Startwert, falls die Differenz von zwei aufeinander folgenden Temperaturwerten Cₘ einen Normalzustand des Temperatursensors erkennen lässt.

Sofern nach dem Deaktivieren der Heizung aufgrund eines erkannten Fehlerzustands des Temperatursensors erneut eine zu erwartende Temperaturänderung gemessen wird, kann davon ausgegangen werden, dass der Temperatursensor korrekt misst. Der Fehlerzustand wird daher aufgehoben und die Heizung erneut aktiviert.

Gemäß einer Ausführungsform wird in Schritt f) ein Normalzustand des Temperatursensors erkannt, falls die Differenz der zwei aufeinander folgenden Temperaturwerte Cₘ mindestens so groß wie ein Mindest-Abkühlgradient ist.

Gemäß einer Ausführungsform ist der Mindest-Abkühlgradient konstant oder ergibt sich aus einer Abkühl-Kennlinie des zu beheizenden Bereichs.

Der Mindest-Abkühlgradient kann konstant sein, beispielsweise 2°C. Alternativ kann auch - analog zur Aufnahme der Kennlinie für die virtuelle Temperatur - eine Kennlinie für den zu erwartenden Temperaturverlauf beim Abkühlen eines gegebenen zu beheizenden Bereichs ermittelt werden. Der Mindest-Abkühlgradient muss dann stets mindestens so groß sein wie sich aus dieser Kennlinie ergibt, oder anders gesagt, die Abkühlung muss mindestens so stark sein.

Gemäß einer Ausführungsform erfolgt das Fortschreiben der virtuellen Temperatur Cᵥ nach jeweils einem ersten Intervall und das Messen der realen Temperaturwerte Cₘ nach jeweils einem zweiten Intervall, wobei das erste Intervall bevorzugt kürzer als das zweite Intervall ist.

Das erste Intervall kann relativ klein gewählt werden, da es sich hier um eine virtuelle Temperatur handelt, die keinen Messvorgang erfordert. Das Intervall kann daher beispielsweise entsprechend der vorhandenen Rechenleistung der Steuereinheit des Haushaltgeräts und/oder der gewünschten zeitlichen Auflösung gewählt werden. Das Intervall sollte nicht kleiner gewählt werden als die zeitliche Auflösung der Kennlinie.

Das zweite Intervall wiederum kann nicht beliebig klein gewählt werden, da es sich hierbei um einen realen Messvorgang handelt, der unter anderem thermische Trägheiten berücksichtigen muss. Außerdem sollte es mindestens so groß gewählt werden wie das erste Intervall. Es sollte wiederum maximal so groß gewählt werden, dass zwischen zwei Messzeitpunkten bei maximal zu erwartender Aufheizung des Geräts noch keine Überhitzung stattfinden kann, wenn die Temperatur beim ersten Messzeitpunkt noch innerhalb der Toleranz gelegen hat.

Bevorzugt ist das erste Intervall kürzer als das zweite, d.h. die virtuelle Temperatur ist feiner aufgelöst als die reale Temperatur, die von dem Temperatursensor gemessen wird.

Gemäß einem zweiten Aspekt wird ein Haushaltgerät bereitgestellt, umfassend
- eine Heizung für einen zu beheizenden Bereich, die eine einstellbare Heizleistung und eine oder mehrere einstellbare Beheizungsarten aufweist;
- eine Steuereinheit der Heizung, die eingerichtet ist, die Heizung entsprechend der Einstellung anzusteuern; und
- einen einzelnen Temperatursensor, der dazu eingerichtet ist, einen Temperaturwert Cₘ zu messen, der die Temperatur des zu beheizenden Bereichs repräsentiert;
wobei die Steuereinheit dazu eingerichtet ist, ein vorstehend beschriebenes Verfahren auszuführen.

Gemäß einer Ausführungsform umfasst das Haushaltgerät ein Kochfeld und der zu beheizende Bereich ist eine Kochstelle des Kochfelds und/oder ein auf der Kochstelle befindliches Gargefäß.

Beispielsweise ist bei Gas- oder Strahlungsheizungs-Kochfeldern der zu beheizende Bereich die Kochstelle selbst, während bei Induktionskochfeldern die Kochstelle zusammen mit einem induktionsgeeigneten Kochgefäß den zu beheizenden Bereich bildet.

Gemäß einer Ausführungsform umfasst das Haushaltgerät einen Garraum, der den zu beheizenden Bereich bildet.

Für Einbaugeräte wie Backofen, Mikrowelle, Dampfgarer oder Wärmeschublade ist der zu beheizende Bereich Teil des Geräts selbst.

Gemäß einer Ausführungsform ist der einzelne Temperatursensor ein direkt messender Temperatursensor, der in dem oder angrenzend an den zu beheizenden Bereich angeordnet ist.

Der Temperatursensor kann beispielsweise ein PT1000-Sensor sein, der in dem zu beheizenden Bereich oder angrenzend dazu angeordnet ist. Für das Beispiel eines Gargeräts mit Garraum kann der Temperatursensor innerhalb des Garraums oder auf der Außenseite einer Wand des Garraums angeordnet sein.

Gemäß einer alternativen Ausführungsform ist der einzelne Temperatursensor ein indirekt messender Temperatursensor, der von dem zu beheizenden Bereich entfernt angeordnet ist. Für das Beispiel eines Kochfelds kann der Temperatursensor beispielsweise ein Infrarotsensor sein, der Infrarotstrahlung des Bodens eines Gargefäßes misst und dadurch indirekt die Temperatur des zu beheizenden Bereichs bestimmt.

Gemäß einer Ausführungsform ist das Haushaltgerät ein Gargerät, das eines oder eine Kombination ist von
Kochfeld;
Backofen;
Mikrowelle;
Dampfgarer;
Wärmeschublade.

Gemäß einem dritten Aspekt wird ein Computerprogramm bereitgestellt, das dazu eingerichtet ist, ein vorstehend beschriebenes Verfahren auszuführen, wenn es auf der Steuereinheit eines vorstehend beschriebenen Haushaltgeräts ausgeführt wird.

Ausführungsbeispiele der Erfindung werden in den Zeichnungen rein schematisch dargestellt und nachfolgend näher beschrieben. Sofern nichts anderes angegeben ist, können einzelne Merkmale aus verschiedenen Ausführungsformen beliebig kombiniert werden.

Es zeigt
- Figur 1: Kennlinien einer Heizung eines Haushaltgeräts gemäß einer Ausführungsform;
- Figur 2: ein Flussdiagramm eines Verfahrens einer Ausführungsform; und
- Figur 3: Temperaturverläufe in einem erfindungsgemäßen Haushaltgerät gemäß einer Ausführungsform.

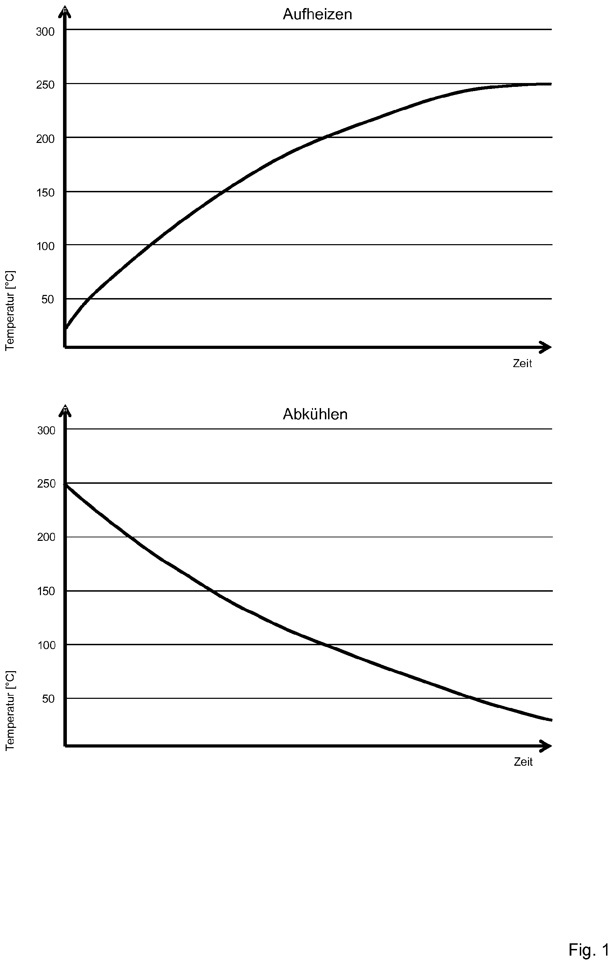

Figur 1 zeigt Kennlinien für Temperaturverläufe über die Zeit bei einem Aufheiz- und einem Abkühlvorgang gemäß einer Ausführungsform. Diese Kennlinien können erfindungsgemäß verwendet werden, um die virtuelle Temperatur fortzuschreiben. Die Kennlinien können durch Ausmessen an einem Gerät bestimmt werden und dann für baugleiche Geräte verwendet werden. Die Kennlinien können den gemessenen Verläufen direkt entsprechen oder daraus geeignet durch Mitteln, Glätten, Maximal-/Minimalwertbildung, Inter-/Extrapolieren, Annähern oder Bilden einer Einhüllenden abgeleitet werden.

Bei den hier gezeigten Kurven sind jeweils nicht-lineare Verläufe gezeigt, wie sie in der Praxis in der Regel vorkommen werden. Bei einer gegebenen Heizleistung wird sich beim Aufheizen die Steigung der Temperaturkurve mit steigender Temperatur verringern. Bei einem gegebenen zu beheizenden Bereich mit einer bestimmten Geometrie und Wärmeisolierung, beispielsweise dem Garraum eines Backofens oder anderen Gargeräts, wird sich umgekehrt beim Abkühlvorgang die Steigung verringern, wenn die Temperatur abfällt bzw. sich der Raumtemperatur annähert.

Sofern das Haushaltgerät mehr als eine Betriebsart der Heizung aufweist, kann entweder für jede Betriebsart eine entsprechende Kennlinie bestimmt werden. Beispielsweise wird der Temperaturverlauf bei den bekannten Beheizungsarten Unter- und/oder Oberhitze, Ringheizkörper, Grill oder Kombinationen davon, jeweils mit oder ohne Umluft, sich jeweils unterscheiden. Es kann aber genügen, eine Mittelung oder Maximalwertbildung zwischen allen möglichen Verläufen auszuführen, um eine gemeinsame Kennlinie zu bestimmen. Auch eine lineare Annäherung kann bei nicht zu sehr abweichenden realen Temperaturverläufen ausreichend sein, um eine geeignete Kennlinie abzuleiten.

Für den Abkühlvorgang kommt es - bei deaktivierter Heizung - im Wesentlichen auf die thermischen Eigenschaften des zu beheizenden Bereichs an. In der Regel kann daher eine einzige Abkühl-Kennlinie genügen. Gegebenenfalls kann das Abkühlen jedoch durch aktive Lüfter wie z.B. in Backöfen beeinflusst sein, etwa in bestimmten Temperaturbereichen. Dies muss dann bei der Kennlinie berücksichtigt werden.

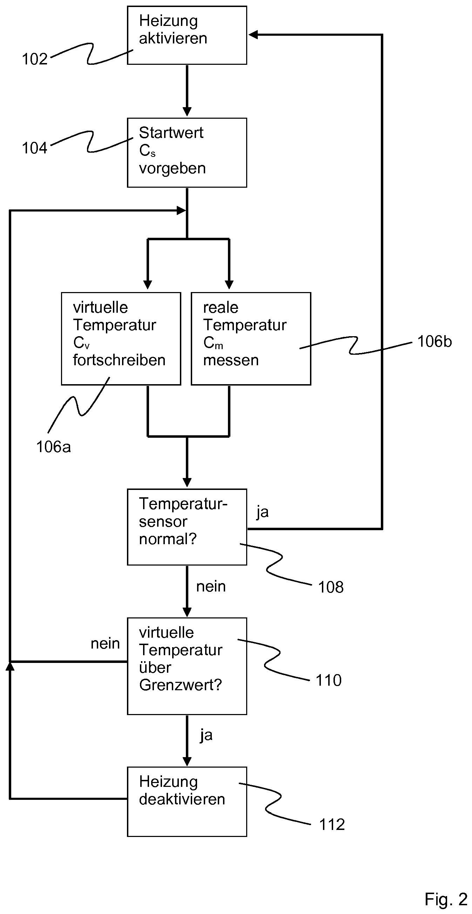

Figur 2 zeigt ein Flussdiagramm einer Ausführungsform eines Verfahrens gemäß der vorliegenden Erfindung. In Schritt 102 wird die Heizung aktiviert. In Schritt 104 wird ein Startwert Cₛ für das Fortschreiben der virtuellen Temperatur vorgegeben. Dies kann ein gemessener Temperaturwert sein, bevorzugt ist es jedoch ein initialer Vorgabewert, beispielsweise ein Wert, der zwischen einer Warntemperatur und einer Abschalttemperatur des Haushaltgeräts liegt.

Im Folgenden wird unabhängig voneinander einerseits eine virtuelle Temperatur fortgeschrieben und andererseits eine reale Temperatur des zu beheizenden Bereichs gemessen. Dies muss nicht zwingend in identischen Zeitintervallen oder zu identischen Zeitpunkten erfolgen. Bevorzugt wird die virtuelle Temperatur mindestens so oft oder öfter als die reale Temperatur bestimmt.

In Schritt 106a wird eine virtuelle Temperatur Cᵥ fortgeschrieben. Dies bedeutet, dass anhand einer für die gegebene Betriebsart und Einstellung der Heizung vorliegenden Kennlinie (wie beispielsweise der in Figur 1 gezeigten Kurve für das Aufheizen), ausgehend von dem in Schritt 104 vorgegebenen Startwert Cₛ, eine virtuelle Temperatur des zu beheizenden Bereichs ermittelt wird. In Schritt 106b wird parallel mit einem Temperatursensor des Haushaltgeräts eine reale Temperatur Cₘ gemessen.

In Schritt 108 erfolgt eine Überprüfung, ob der Temperatursensor ein normales Verhalten zeigt. Erfindungsgemäß ist unter normalem Verhalten eine ausreichende Temperaturänderung noch oben oder unten zu verstehen. Abhängig davon, ob die Heizung aktiv ist oder nicht, wird ein Aufheizen oder Abkühlen des zu beheizenden Bereichs erwartet. Es muss bei normalem Verhalten daher eine Mindestdifferenz zwischen zwei aufeinander folgenden gemessenen realen Temperaturwerten Cₘ vorliegen. Diese Differenz kann einen konstanten Wert aufweisen, beispielsweise 2°C, oder sie kann abhängig sein von der Einstellung der Heizung und der Ist-Temperatur, wobei dafür bevorzugt der vorher gemessene Temperaturwert Cₘ herangezogen werden kann.

Sofern in Schritt 108 bestimmt wird, dass der Temperatursensor normal arbeitet, wird das Verfahren mit Schritt 102 beginnend fortgeführt. Dabei bedeutet das Aktivieren der Heizung sinngemäß, dass die Heizung aktiviert gelassen wird, wenn sie bei Ausführen dieses Schritts bereits aktiviert ist. Weiterhin wird im folgenden Schritt 104 der letzte gemessene Wert Cₘ als neuer Startwert Cₛ verwendet.

Sofern in Schritt 108 bestimmt wird, dass der Temperatursensor nicht normal arbeitet, wird in Schritt 110 geprüft, ob die virtuelle Temperatur einen Grenzwert überschreitet. Sofern dies nicht der Fall ist, wird das Verfahren mit den Schritten 106a und 106b fortgeführt. Es wird daher kein neuer Startwert Cₛ für die virtuelle Temperatur vorgegeben. Solange der Temperatursensor nicht normal arbeitet, die virtuelle Temperatur Cᵥ jedoch unterhalb des Grenzwerts bleibt, wird das Verfahren somit bei aktivierter Heizung fortgeführt.

Sofern in Schritt 110 festgestellt wird, dass die virtuelle Temperatur Cᵥ den Grenzwert überschreitet, wird in Schritt 112 die Heizung deaktiviert. Danach wird das Verfahren mit den Schritten 106a und 106b fortgeführt, wobei die virtuelle Temperatur Cᵥ nun für den Abkühlfall fortgeschrieben wird. In Schritt 108 ist daher nun ein normales Verhalten des Temperatursensors gegeben, wenn die gemessene Temperatur ausreichend abfällt. Sobald dies der Fall ist, wird das Verfahren mit dem Aktivieren der Heizung in Schritt 102 und dem Vorgeben eines neuen Startwerts in Schritt 104 fortgeführt, wobei der Startwert Cₛ auf den letzten gemessenen Wert Cₘ gesetzt wird.

In einer weiteren Ausführungsform (nicht gezeigt) kann eine weitere Überprüfung nach Schritt 110 vorgesehen werden, sofern die virtuelle Temperatur Cᵥ noch unterhalb des Grenzwerts bleibt. Es wird dann überprüft, ob die virtuelle Temperatur Cᵥ über einem Warnwert liegt, der niedriger ist als der Grenzwert. Sofern dies der Fall ist, wird die Heizung deaktiviert. Nach einer vorgegebenen Zeit wird automatisch mit Schritt 102 fortgefahren, d.h. die Heizung wieder aktiviert, ohne ein normales Verhalten des Temperatursensors vorauszusetzen. Damit wird die Verfügbarkeit der Heizung erhöht. Bevorzugt wird dies pro Ein-/Ausschaltzyklus des Haushaltgeräts jedoch nur einmal ausgeführt.

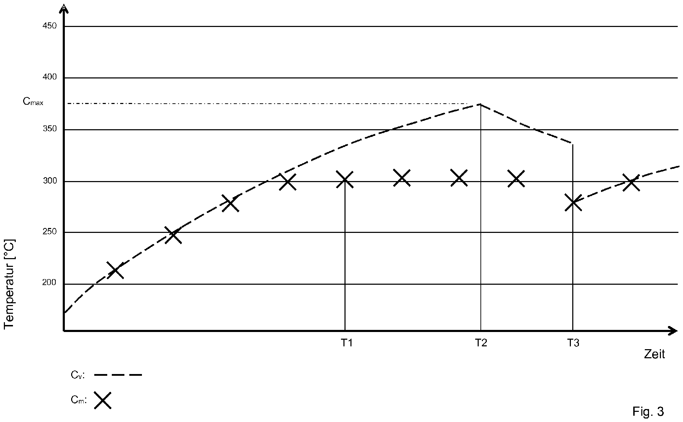

Figur 3 zeigt einen Temperaturverlauf in einem erfindungsgemäßen Haushaltgerät gemäß einer Ausführungsform. Die gezeigten Temperaturwerte sind rein beispielhaft. Ein Aufheizvorgang des Haushaltgeräts beginnt bei einer (virtuellen) Temperatur von ca. 170 °C. Die virtuelle Temperatur Cᵥ ist hier mit einer gestrichelten Kurve dargestellt. Die Fortschreibung der virtuellen Temperatur kann quasi kontinuierlich erfolgen, abhängig davon, wie viele Datenpunkte die zugrunde liegende Kennlinie aufweist. In regelmäßigen Intervallen wird die reale Temperatur Cₘ gemessen, hier als Kreuze dargestellt.

Zum Zeitpunkt T1 zeigt die gemessene Temperatur Cₘ nur noch einen minimalen Temperaturanstieg zum vorhergehenden Wert. Die gemessene Temperatur bleibt in etwa konstant bei ca. 300 °C. Ab T1 befindet sich das Gerät in einem Fehlerzustand, da von einem nicht normalen Verhalten des Temperatursensors auszugehen ist. Bei einem messbaren Temperaturabfall trotz aktivierter Heizung (nicht gezeigt) würde entsprechend verfahren.

Bei einem Zeitpunkt T2 hat die unabhängig von der gemessenen Temperatur fortgeschriebene virtuelle Temperatur einen Grenzwert Cₘₐₓ überschritten. Es erfolgt daher eine Abschaltung der Heizung. Die virtuelle Temperatur wird ab T2 entsprechend der zugehörigen Abkühl-Kennlinie fortgeschrieben.

Zum Zeitpunkt T3 zeigt die gemessene Temperatur einen Abfall zum vorhergehenden Wert. Da dieser Abfall mindestens dem zu erwartenden Abkühl-Gradienten entspricht, wird davon ausgegangen, dass der Temperatursensor wieder normal arbeitet. Daher wird die Heizung reaktiviert und ein neuer Startwert für die virtuelle Temperatur vorgegeben, der dem letzten gemessenen Wert Cₘ entspricht.

Das Gerät befindet sich zwischen Start und T1 in einem Normalzustand, zwischen T1 und T2 in einem Fehlerzustand mit aktivierter Heizung, zwischen T2 und T3 in einem Fehlerzustand mit deaktivierter Heizung, und ab T3 wieder in einem Normalzustand.

## Patentansprüche

1. Verfahren zur Steuerung einer Heizung eines zu beheizenden Bereichs eines Haushaltgeräts, umfassend:
a) Aktivieren der Heizung;
b) Vorgeben eines Temperatur-Startwerts Cₛ;
c) Zeitliches Fortschreiben einer virtuellen Temperatur Cᵥ des zu beheizenden Bereichs, beginnend mit dem Temperatur-Startwert Cₛ, basierend auf einer Kennlinie der Heizung;
d) Fortlaufendes Messen realer Temperaturwerte Cₘ, die die Temperatur des zu beheizenden Bereichs repräsentieren, mit einem einzelnen Temperatursensor;
e) Fortfahren mit Schritt b) unter Verwendung des aktuellen Temperaturwerts Cₘ als Temperatur-Startwert Cₛ, falls die Differenz von zwei aufeinander folgenden Temperaturwerten Cₘ einen Normalzustand des Temperatursensors erkennen lässt; und
f) Deaktivieren der Heizung, falls die Differenz der zwei aufeinander folgenden Temperaturwerte Cₘ einen Fehlerzustand des Temperatursensors erkennen lässt und die virtuelle Temperatur Cᵥ einen Grenzwert überschreitet.

2. Verfahren nach Anspruch 1, wobei
in Schritt e) ein Normalzustand des Temperatursensors erkannt wird, falls die Differenz der zwei aufeinander folgenden Temperaturwerte Cₘ mindestens so groß wie ein Mindest-Aufheizgradient ist; und
in Schritt f) ein Fehlerzustand des Temperatursensors erkannt wird, falls die Differenz der zwei aufeinander folgenden Temperaturwerte Cₘ kleiner als der Mindest-Aufheizgradient ist.

3. Verfahren nach einem der vorhergehenden Ansprüche, wobei
die Heizung eine einstellbare Heizleistung und eine oder mehrere einstellbare Beheizungsarten aufweist; und
die Kennlinie ein von der Einstellung der Heizung abhängiger Temperaturverlauf des zu beheizenden Bereichs ist.

4. Verfahren nach Anspruch 3, wobei der Mindest-Aufheizgradient konstant oder von der Einstellung der Heizung sowie der Ist-Temperatur des zu beheizenden Bereichs abhängig ist.

5. Verfahren nach einem der vorhergehenden Ansprüche 1 bis 4, weiter umfassend:
g) Deaktivieren der Heizung, falls die Differenz der zwei aufeinander folgenden Temperaturwerte Cₘ einen Fehlerzustand des Temperatursensors erkennen lässt und die virtuelle Temperatur Cᵥ den Grenzwert nicht überschreitet, aber einen Warnwert überschreitet, der geringer ist als der Grenzwert; und
h) Reaktivieren der Heizung und Fortfahren mit Schritt b) nach einer vorgegebenen begrenzten Zeitspanne.

6. Verfahren nach einem der vorhergehenden Ansprüche, nach dem Deaktivieren der Heizung in Schritt f) weiter umfassend:
f) Reaktivieren der Heizung und Fortfahren mit Schritt b) unter Verwendung des aktuellen Temperaturwerts Cₘ als Startwert, falls die Differenz von zwei aufeinander folgenden Temperaturwerten Cₘ einen Normalzustand des Temperatursensors erkennen lässt.

7. Verfahren nach Anspruch 6, wobei
in Schritt f) ein Normalzustand des Temperatursensors erkannt wird, falls die Differenz der zwei aufeinander folgenden Temperaturwerte Cₘ mindestens so groß wie ein Mindest-Abkühlgradient ist.

8. Verfahren nach Anspruch 7, wobei der Mindest-Abkühlgradient konstant ist oder sich aus einer Abkühl-Kennlinie des zu beheizenden Bereichs ergibt.

9. Verfahren nach einem der vorhergehenden Ansprüche, wobei das Fortschreiben der virtuellen Temperatur Cᵥ nach jeweils einem ersten Intervall und das Messen der realen Temperaturwerte Cₘ nach jeweils einem zweiten Intervall erfolgt, wobei das erste Intervall bevorzugt kürzer als das zweite Intervall ist.

10. Haushaltgerät, umfassend
- eine Heizung für einen zu beheizenden Bereich, die eine einstellbare Heizleistung und eine oder mehrere einstellbare Beheizungsarten aufweist;
- eine Steuereinheit der Heizung, die eingerichtet ist, die Heizung entsprechend der Einstellung anzusteuern; und
- einen einzelnen Temperatursensor, der dazu eingerichtet ist, einen Temperaturwert Cₘ zu messen, der die Temperatur des zu beheizenden Bereichs repräsentiert;
wobei die Steuereinheit dazu eingerichtet ist, ein Verfahren nach einem der Ansprüche 1 bis 6 auszuführen.

11. Haushaltgerät nach Anspruch 10, wobei das Haushaltgerät ein Kochfeld umfasst und der zu beheizende Bereich eine Kochstelle des Kochfelds und/oder ein auf der Kochstelle befindliches Gargefäß ist.

12. Haushaltgerät nach Anspruch 10 oder 11, wobei das Haushaltgerät einen Garraum umfasst, der den zu beheizenden Bereich bildet.

13. Haushaltgerät nach einem der Ansprüche 10 bis 12, wobei
der einzelne Temperatursensor ein direkt messender Temperatursensor ist, der in dem oder angrenzend an den zu beheizenden Bereich angeordnet ist; oder
der einzelne Temperatursensor ein indirekt messender Temperatursensor ist, der von dem zu beheizenden Bereich entfernt angeordnet ist.

14. Haushaltgerät nach einem der Ansprüche 10 bis 14, wobei das Haushaltgerät ein Gargerät ist, das eines oder eine Kombination ist von
Kochfeld;
Backofen;
Mikrowelle;
Dampfgarer;
Wärmeschublade.

15. Computerprogramm, das dazu eingerichtet ist, ein Verfahren nach einem der Ansprüche 1 bis 9 auszuführen, wenn es auf der Steuereinheit eines Haushaltgeräts nach einem der Ansprüche 10 bis 14 ausgeführt wird.

## Claims

1. A method for controlling the heating of a region to be heated of a household appliance, the method comprising:
a) activating the heating;
b) providing a starting temperature value Cₛ;
c) extrapolating a virtual temperature Cᵥ of the region to be heated over time, beginning from the starting temperature value Cs and based on a characteristic heating curve;
d) continuously measuring real temperature values Cₘ representing the temperature of the region to be heated, using a single temperature sensor;
e) continuing with step b) using the current temperature value Cₘ as the starting temperature value Cₛ if the difference between two successive temperature values Cₘ indicates a normal condition of the temperature sensor; and
f) deactivating the heating if the difference between the two successive temperature values Cₘ indicates a fault condition of the temperature sensor and the virtual temperature Cᵥ exceeds a threshold.

2. The method according to claim 1, wherein:
in step e), a normal condition of the temperature sensor is detected if the difference between the two successive temperature values Cₘ is at least equal to a minimum heating gradient; and
in step f), a fault condition of the temperature sensor is detected if the difference between the two successive temperature values Cₘ is less than the minimum heating gradient.

3. The method according to one of the preceding claims, wherein:
the heating system has an adjustable heat output and one or more adjustable heating modes; and
the characteristic curve is a temperature profile over time of the region to be heated, which is dependent on the heating setting.

4. The method according to claim 3, wherein the minimum heating gradient is constant or dependent on the heating setting and on the actual temperature of the region to be heated.

5. The method according to one of claims 1 to 4, further comprising:
g) deactivating the heating if the difference between the two successive temperature values Cₘ indicates a fault condition of the temperature sensor and the virtual temperature Cᵥ does not exceed the threshold, but does exceed a warning value which is lower than the threshold; and
h) reactivating the heating and continuing with step b) after a predetermined limited period of time.

6. The method according to one of the preceding claims, further comprising, after deactivating the heating in step f):
f) reactivating the heating and continuing with step b) using the current temperature value Cₘ as the starting value if the difference between two successive temperature values Cₘ indicates a normal condition of the temperature sensor.

7. The method according to claim 6, wherein:
in step f), a normal condition of the temperature sensor is detected if the difference between the two successive temperature values Cₘ is at least equal to a minimum cooling gradient.

8. The method according to claim 7, wherein the minimum cooling gradient is constant or is derived from a characteristic cooling curve of the region to be heated.

9. The method according to claim 1, wherein the extrapolation of the virtual temperature Cᵥ is in each case performed after a first time interval, and the measurement of the real temperature values Cₘ is in each case performed after a second time interval, the first time interval preferably being shorter than the second time interval.

10. A household appliance comprising:
a heating system for heating a region to be heated, the heating system having an adjustable heat output and one or more adjustable heating modes;
a controller for controlling the heating system, the controller being adapted to control the heating system according to the setting; and
a single temperature sensor adapted to measure a temperature value Cₘ representing the temperature of the region to be heated,
wherein the controller is adapted to perform a method for controlling the heating of a region to be heated of a household appliance, the method comprising:
a) activating the heating;
b) providing a starting temperature value Cₛ;
c) extrapolating a virtual temperature Cᵥ of the region to be heated over time, beginning from the starting temperature value Cₛ and based on a characteristic heating curve;
d) continuously measuring real temperature values Cₘ representing the temperature of the region to be heated, using a single temperature sensor;
e) continuing with step b) using the current temperature value Cm as the starting temperature value Cₛ if the difference between two successive temperature values Cₘ indicates a normal condition of the temperature sensor; and
f) deactivating the heating if the difference between the two successive temperature values Cₘ indicates a fault condition of the temperature sensor and the virtual temperature Cᵥ exceeds a threshold.

11. The household appliance according to claim 10, wherein the household appliance includes a cooktop, and the region to be heated comprises a cooking zone of the cooktop and/or a cooking vessel located on the cooking zone.

12. The household appliance according to claim 10 or 11, wherein the household appliance includes a cooking chamber which forms the region to be heated.

13. The household appliance according to one of claims 10 to 12, wherein:
the single temperature sensor comprises a direct measuring temperature sensor which is located in or adjacent to the region to be heated; or
the single temperature sensor comprises an indirect measuring temperature sensor which is located remotely from the region to be heated.

14. The household appliance according to one of claims 10 to 14, wherein the household appliance comprises a cooking appliance which is one or a combination of the following:
a cooktop;
a baking oven;
a microwave oven;
a steam cooker;
a warming drawer.

15. A computer program adapted to perform a method according to one of claims 1 to 9 when executed on the controller of a household appliance according to one of claims 10 to 14.

## Revendications

1. Procédé de commande d'un dispositif de chauffage d'une zone à chauffer d'un appareil ménager, le procédé comprenant les étapes suivantes :
a) activer le dispositif de chauffage ;
b) définir une valeur de température de départ Cₛ ;
c) actualiser une température virtuelle Cᵥ de la zone à chauffer, à partir de la valeur de température de départ Cₛ sur la base d'une caractéristique du dispositif de chauffage ;
d) mesurer en continu des valeurs de température réelles Cₘ, représentant la température de la zone à chauffer, avec un seul capteur de température ;
e) poursuivre avec l'étape b) à l'aide de la valeur de température actuelle Cₘ comme valeur de température de départ Cₛ, si la différence entre deux valeurs de température Cₘ successives permet de détecter un état normal du capteur de température ; et
f) désactiver le dispositif de chauffage si la différence entre les deux valeurs de température Cₘ successives permet de détecter un état de défaut du capteur de température et si la température virtuelle Cᵥ devient supérieure à une valeur limite.

2. Procédé selon la revendication 1, dans lequel
un état normal du capteur de température est détecté à l'étape e) si la différence entre les deux valeurs de température Cₘ successives est au moins égale à un gradient de chauffage minimum ; et
un état de défaut du capteur de température est détecté à l'étape f) si la différence entre les deux valeurs de température Cₘ successives est inférieure au gradient de chauffage minimum.

3. Procédé selon l'une des revendications précédentes, dans lequel
le dispositif de chauffage a une puissance de chauffage réglable et comporte au moins un mode de chauffage réglable ; et
la caractéristique est un profil de température de la zone à chauffer qui dépend du réglage du dispositif de chauffage

4. Procédé selon la revendication 3, dans lequel le gradient de chauffage minimal est constant ou dépend du réglage du dispositif de chauffage et de la température réelle de la zone à chauffer.

5. Procédé selon l'une des revendications précédentes 1 à 4, comprenant en outre :
g) la désactivation du dispositif de chauffage si la différence entre les deux valeurs de température Cₘ successives permet de détecter un état de défaut du capteur de température et si la température virtuelle Cᵥ ne dépasse pas la valeur limite, mais devient supérieure à une valeur d'avertissement qui est inférieure à la valeur limite ; et
h) la réactivation du dispositif de chauffage et la poursuite à l'étape b) après un intervalle de temps limité défini.

6. Procédé selon l'une des revendications précédentes, comprenant en outre après la désactivation du dispositif de chauffage à l'étape f) :
f) la réactivation du dispositif de chauffage et la poursuite à l'étape b) à l'aide de la valeur de température actuelle Cₘ comme valeur de départ si la différence entre deux valeurs de température Cₘ successives permet de détecter un état normal du capteur de température.

7. Procédé selon la revendication 6, dans lequel
un état normal du capteur de température est détecté à l'étape f) si la différence entre les deux valeurs de température Cₘ successives est au moins égale à un gradient de refroidissement minimum.

8. Procédé selon la revendication 7, dans lequel le gradient de refroidissement minimum est constant ou résulte d'une caractéristique de refroidissement de la zone à chauffer.

9. Procédé selon l'une des revendications précédentes, dans lequel l'actualisation de la température virtuelle Cᵥ à chaque fois après un premier intervalle et la mesure des valeurs de température réelle Cₘ sont effectuées à chaque fois après un deuxième intervalle, le premier intervalle étant de préférence plus court que le deuxième intervalle.

10. Appareil ménager comprenant
- un dispositif de chauffage d'une zone à chauffer ayant une puissance de chauffage réglable et comportant au moins un mode de chauffage réglable ;
- une unité de commande du dispositif de chauffage, adaptée pour commander le dispositif de chauffage en fonction du réglage ; et
- un seul capteur de température adapté pour mesurer une valeur de température Cₘ représentant la température de la zone à chauffer ;
l'unité de commande étant adaptée pour mettre en oeuvre un procédé selon l'une des revendications 1 à 6.

11. Appareil ménager selon la revendication 10, l'appareil ménager comprenant une plaque de cuisson et la zone à chauffer étant une zone de cuisson de la plaque de cuisson et/ou un récipient se trouvant sur la plaque de cuisson.

12. Appareil ménager selon la revendication 10 ou 11, l'appareil ménager comprenant une chambre de cuisson qui forme la zone à chauffer.

13. Appareil ménager selon l'une des revendications 10 à 12, dans lequel
le capteur de température unique est un capteur de température à mesure directe situé dans la zone à chauffer ou à proximité de celle-ci ; ou
le capteur de température unique est un capteur de température à mesure indirecte situé loin de la zone à chauffer.

14. Appareil ménager selon l'une des revendications 10 à 14, l'appareil ménager étant un appareil de cuisson qui est l'un des éléments suivants ou une combinaison des éléments suivants
plaque de cuisson ;
four ;
four à micro-ondes ;
cuiseur à vapeur ;
tiroir chauffant.

15. Logiciel adapté pour mettre en oeuvre un procédé selon l'une des revendications 1 à 9, lorsqu'il est exécuté sur l'unité de commande d'un appareil ménager selon l'une des revendications 10 à 14.
